Europäisches Patentamt

(19) European Patent Office

Office européen des brevets

(11) Numéro de publication: **0 397 540**

**A1**

## (12) DEMANDE DE BREVET EUROPEEN

(21) Numéro de dépôt: **90400706.9**

(22) Date de dépôt: **16.03.90**

(51) Int. Cl.5: **F01L 1/34, F16H 53/04**

(30) Priorité: **17.03.89 FR 8903507**

(43) Date de publication de la demande:
**14.11.90 Bulletin 90/46**

(84) Etats contractants désignés:
**DE ES GB IT**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Pillon, Robert**
**28, rue Henri Dunant**
**F-92500 Rueil(FR)**

(74) Mandataire: **Chassagnon, Jean Alain et al**
**8/10, avenue Emile Zola**
**F-92109 Boulogne-Billancourt(FR)**

(54) Arbre à cames pour moteur à distribution variable.

(57) Arbre à cames pour moteur à arbre à cames unique, du type incorporant un dispositif de déphasage. Il comprend un arbre central (2), des paliers (4,6,8,10, 12) de guidage de cet arbre et de positionnement latéral des cames, des bagues de déphasage (14), des cames (18) pourvues chacune d'une rampe de déphasage (16), et un piston de déphasage (26) susceptible d'entraîner cet arbre central en translation.

Application : notamment à la commande automatique du déphasage de distribution.

FIG.1

## Arbre à cames pour moteur à distribution variable.

La présente invention se rapporte au domaine du calage des lois de levée de soupapes propre au moteur à combustion interne. Elle vise plus particulièrement un arbre à cames incorporant un dispositif de déphasage, destiné à un moteur à distribution variable et arbre à cames unique.

Le calage des lois de levée des soupapes d'admission et d'échappement fait généralement l'objet d'un compromis entre différents objectifs. Par exemple, une recherche de performances maximales supposera un compromis entre un couple à bas régime et une puissance maximale à haut régime. Par contre, un compromis entre une stabilité au ralenti, une émission de polluants à faible charge et une puissance à haut régime, peut être envisagé.

Le principe d'un calage adéquat en fonction du régime ou de la charge s'avère par conséquent intéressant.

Par ailleurs, différents systèmes permettant d'obtenir ce résultat ne s'appliquent en majorité qu'aux moteurs pourvus de deux arbres à cames, respectivement pour l'admission et pour l'échappement.

La présente invention a pour objet un arbre à cames du type incorporant un dispositif de déphasage, qui comprend :
- un arbre central de section polygonale,
- des paliers de guidage de cet arbre et de positionnement latéral des cames,
- des bagues de déphasage montées sur cet arbre en étant solidaires en translation de celui-ci,
- des cames pourvues chacune d'une rampe de déphasage coopérant avec la bague de déphasage correspondante;
- et un piston de déphasage susceptible d'entraîner cet arbre central en translation.

Cette disposition procure une grande simplicité de réalisation alliée à une fiabilité effective de fonctionnement qui permettent un décalage automatique de cames en fonction du régime ou de la charge.

D'autres particularités et avantages ressortiront plus clairement de la description qui suit d'un mode de réalisation préféré, donné à titre d'exemple non limitatif, en référence aux dessins annexés, dans lesquels :
- la figure 1 représente une vue en coupe axiale et longitudinale d'un arbre à cames conforme à l'invention en position d'absence de déphasage;
- la figure 2 représente une vue en perspective partielle d'un arbre central de cet arbre à cames, solidaire d'une bague de déphasage;
- la figure 3 représente une vue en perspective partielle d'une came pourvue de sa rampe de déphasage;
- la figure 4 représente une vue en perspective partielle d'un ensemble arbre central-bague de déphasage-came, avant décalage;
- la figure 5 représente deux vues en coupe A-A et B-B de la figure 1 montrant les positions respectives de deux cames d'admission et d'échappement avant décalage;
- la figure 6 représente une vue en coupe axiale et longitudinale de l'arbre à cames illustré à la figure 1, en position de déphasage;
- la figure 7 représente une vue en perspective partielle d'un ensemble arbre central-bague de déphasage-came, après décalage;
- la figure 8 représente deux vues en coupe $A'A'$ et $B'B'$ de la figure 6, montrant les positions respectives de deux cames d'admission et d'échappement après décalage.

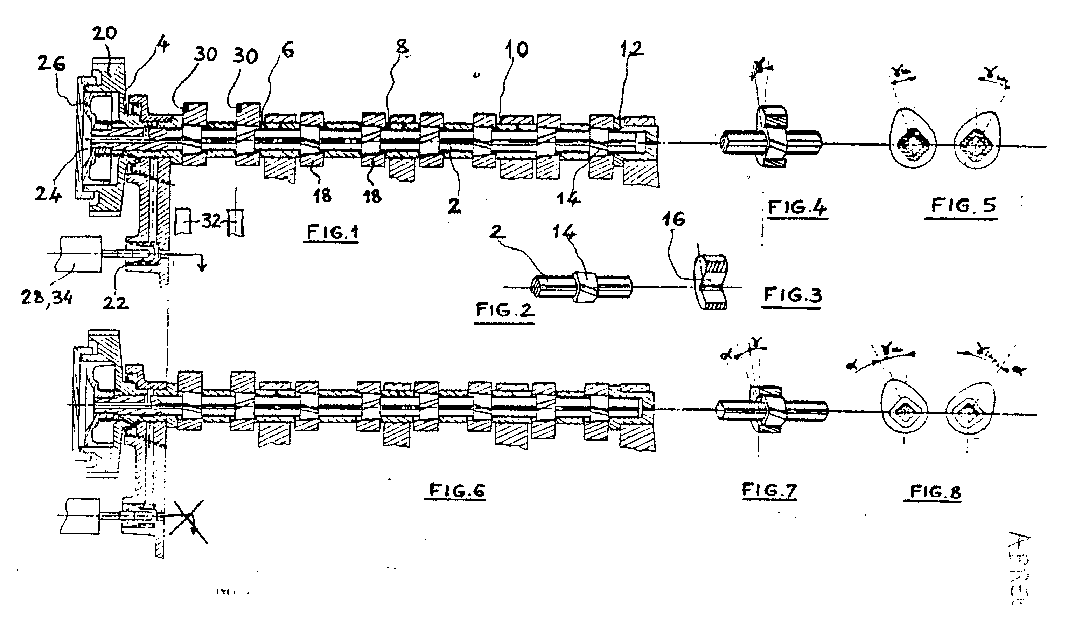

Comme illustré sur les figures 1 à 8, cet arbre à cames comprend un arbre central 2 de section polygonale. Le nombre de faces de celui-ci est choisi égal au nombre de cylindres de la rangée, ou multiple de ce nombre, afin de ne pouvoir disposer que d'un type de cames d'admission et d'un type de cames d'échappement, ce qui élimine toute confusion lors du montage.

Cet arbre central coulisse axialement dans plusieurs paliers 4,6,8,10,12.

Le palier 12 a pour fonction de guider l'extrémité de l'arbre central et de servir de butée latérale pour l'ensemble arbre à cames assemblé une fois monté dans la culasse.

Les paliers 6,8,10 empêchent la flexion de l'arbre central, alimentant en huile des bagues de déphasage 14, des rampes de déphasage 16 et éventuellement des cames 18, et positionnent latéralement ces cames.

Le palier 4 est solidaire d'une poulie crantée 20. Il assure la mise en translation de l'arbre central 2 par l'intermédiaire d'un circuit d'huile sous pression incorporant un piston d'obturation 22, une chambre d'huile 24 et un piston de déphasage 26. Comme pour le palier 12, il fait office de butée latérale pour l'ensemble arbre à cames assemblé.

Les bagues de déphasage 14 à rampe hélicoïdale sont rendues solidaires en translation de l'arbre central 2.

Le déplacement axial de l'arbre central 2 entraîne un coulissement des bagues 14 dans les rampes 16 des cames correspondantes 18; ce mouvement de translation se traduit ainsi par un mouvement de rotation des cames par rapport à l'arbre central.

Les figures 1 et 6 illustrent un dispositif de commande hydraulique pour cet arbre à cames, qui permet de réaliser un asservissement fiable et économique. La pression et le débit d'huile nécessaire sont fournis par la pompe à huile du moteur ou par une pompe indépendante.

Pour faire passer le calage des lois d'admission et d'échappement d'un extrême à l'autre, il suffit de remplir ou de vider la chambre d'huile 24 située devant le piston de déphasage 26.

Deux modes de commande sont envisageables :
- par "tout ou rien", c'est-à-dire de butée à butée avec un simple électroaimant 28,
- et par modulation, c'est-à-dire en repérant les positions des cames d'admission et d'échappement au moyen d'une cible 30 montée sur les nez de came, et d'un capteur 32, et en asservissant ces positions à l'aide d'une électrovanne battante 34.

Sur la figure 1, l'arbre à cames représenté occupe une position sans décalage avec l'électrovanne 34 non sollicitée. Le piston d'obturation 22 laisse alors passer l'huile dans le carter-cylindre du moteur.

Sur la figure 6, l'arbre à cames occupe cette fois une position de déphasage avec l'électrovanne 34 sollicitée. Le piston 22 obture ou module le passage d'huile vers le carter-cylindre du moteur, de façon à faire varier l'angle $\alpha$ de décalage des cames. La pression d'huile pousse alors le piston de déphasage 26, mais aussi l'arbre central 2. Le déplacement axial de l'arbre central entraîne une rotation des cames 18 de cet angle $\alpha$ de décalage, d'un coté ou de l'autre suivant le sens d'enroulement des rampes 16.

Avec un angle $\beta$ de rampe, compris entre 10° et 30°, il est possible d'obtenir un angle $\alpha$ de décalage compris entre 1° à 15°, par exemple.

L'arbre à cames ainsi conçu permet d'envisager une commande automatique gérée électroniquement du déphasage de distribution.

## Revendications

1. Arbre à cames pour moteur à distribution variable pourvu d'un seul arbre à cames, du type incorporant un dispositif de déphasage, caractérisé en ce qu'il est constitué par :
- un arbre central (2),
- des paliers (4,6,8,10,12) de guidage de cet arbre et de positionnement latéral des cames,
- des bagues de déphasage (14) montées sur cet arbre en étant solidaires en translation de celui-ci,
- des cames (18) pourvues chacune d'une rampe de déphasage (16) coopérant avec la bague de déphasage correspondante,
- et un piston de déphasage (26) susceptible d'entraîner cet arbre central (2) en translation.

2. Arbre à cames suivant la revendication 1, caractérisé en ce que l'arbre central (2) est actionné en translation par un circuit d'huile sous pression incorporant un piston d'obturation (22), une chambre d'huile (24) et un piston de déphasage (26).

3. Arbre à cames suivant la revendication 1 ou 2, caractérisé en ce que l'arbre central présente une section polygonale dont le nombre de faces est égal au nombre de cylindres ou à un multiple de celui-ci.

20

26

4

30 30 6

8

10

12

24

28,34 22

32

FIG.1

2 14 18 18

FIG.2

16

FIG.3

FIG.4

FIG.5

FIG.6

FIG.7

FIG.8

EP 0 397 540 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 522 085 (KANE) <br> * Colonne 3, ligne 43 - colonne 4, ligne 36; figures 1-6 * | 1 | F 01 L  1/34 <br> F 16 H  53/04 |
| Y | | 2,3 | |
| Y | GB-A-2 157 364 (GRAHAM) <br> * Résumé; figure 1 * | 2 | |
| Y | GB-A-1 090 500 (M.K. SAUL) <br> * En entier * | 1,2 | |
| Y | EP-A-0 147 209 (RENOLD) <br> * Page 20, ligne 7 - page 21, ligne 10; figure 1 * | 1,2 | |
| Y | GB-A-2 121 908 (NIPPON PISTON RING) <br> * Résumé; figure 2 * | 3 | |

DOMAINES TECHNIQUES RECHERCHES (Int. Cl.5)

F 01 L
F 16 H

Le présent rapport a été établi pour toutes les revendications

| Lieu de la recherche | Date d'achèvement de la recherche | Examinateur |
|---|---|---|
| LA HAYE | 15-06-1990 | MENDE H. |

EPO FORM 1503 03.82 (P0402)